# EUROPEAN PATENT APPLICATION

(11) **EP 2 915 821 A1**
(43) Date of publication of application: **09.09.2015**
(21) Application number: 14157714.8
(22) Date of filing: 04.03.2014
(51) Int. Cl.: C08F 2/18, C08F 214/06, C08F 6/00

(54) **Method of treating a poly(vinyl chloride) composition with dense phase carbon dioxide**

(71) Applicant: Synthomer Ltd., Harlow, Essex CM20 2BH (GB)
(72) Inventor: Howdle, Steven, Nottingham Notts. NG96NA (GB); Shaw, Peter, Bishops Stortford Herts CM23 4JP (GB); Seymour, Christopher, Bingham Nottingham NB13 8EA (GB)
(74) Representative: f & e patent

(57) **Abstract**

The present invention concerns a method of treating a poly(vinyl chloride) composition comprising poly(vinyl chloride) particles and obtained by a process selected from suspension polymerization in an aqueous medium, microsuspension polymerization in an aqueous medium, emulsion polymerization in an aqueous medium and bulk polymerization, which method comprises contacting the poly(vinyl chloride) composition with supercritical carbon dioxide (scCO₂), near critical CO₂ or liquid CO₂.

## Description

The present invention relates to a new method of treating and modifying a poly(vinyl chloride) composition as obtained from a commercial production process, preferably from a suspension polymerization process.

Poly(vinyl chloride), commonly abbreviated as PVC, is the third most widely produced plastic after polyethylene and polypropylene. Rigid PVC is mainly used in the construction sector e.g. for pipes and profiles whereas soft PVC which has been made more flexible by the addition of plasticizers, typically phthalates and adipates, is used in various areas such as for medical applications, electrical cable insulation and in the clothing and furniture industry. There are four main processes used for the commercial production of poly(vinyl chloride) which are suspension, emulsion, mass (also called bulk) and microsuspension polymerization.

The kinetics of polymerization of vinyl chloride are such that is impractical from an economical viewpoint to polymerize the vinyl chloride monomer completely because the rate of polymerization falls rapidly at high conversion. Consequently, all polymerization processes of vinyl chloride have in common the feature that substantial quantities of vinyl chloride monomer remain unreacted after the polymerization process is finished. In fact, 10 to 20 % of the starting vinyl chloride monomer charged remains unreacted at the end of most commercial processes. The traditional method for vinyl chloride removal after the polymerization to the normal 80 to 90 % conversion of vinyl chloride monomer to poly(vinyl chloride) is venting the gaseous vinyl chloride monomer. This applies to all commercial polymerization processes. The resulting PVC contains about 3 % by weight of unreacted vinyl chloride, based on the weight of PVC. This concentration can be further reduced by increasing the temperature of the slurry/latex/bulk poly(vinyl chloride) and applying reduced pressure until 1 to 2 % by weight of poly(vinyl chloride) remains. Before 1974 the PVC thus obtained was subjected to final drying step(s) during which most of the residual vinyl chloride monomer was removed but a significant quantity such as 10 to 1000 ppm w/w of poly(vinyl chloride) remained in the PVC.

Health and environmental concerns about the presence of these still relatively high amounts of vinyl chloride monomer in the PVC have led to the development of additional purification steps. In recent years, stripping the PVC slurry obtained in the suspension polymerization process with steam has become the most abundant method for removing unreacted vinyl chloride monomer. In this way, a slurry with a residual vinyl chloride concentration of less than 10 ppm (w/w of PVC) can be produced. Traditionally, the PVC slurry is then subjected to mechanical separation, typically centrifugation, to remove the aqueous suspension medium. The thus obtained wet cake still contains 20 to 30 % by weight (based on the weight of the wet cake) of water which is removed in a subsequent thermal drying (dewatering) step. Although this standard process results in an acceptable final vinyl chloride concentration after drying of less that 1 ppm both the steam stripping and the drying step involve high energy consumption which is undesirable from an economical and ecological aspect. Typically steam stripping is responsible for about 60 % of the total energy consumption of the entire resin manufacturing process. Moreover, the high temperatures applied during drying/dewatering can result in thermal degradation of the PVC and subsequent addition of brightening agents etc. may be required.

Alternative methods of reducing the residual content of monomers in PVC had been proposed in the literature but have not been used in commercial processes. For example, DE 26 12 096 A1 teaches hot-mixing PVC powder with a substance that does not soften PVC and is volatile in a temperature range of from 50 to 125°C. Exemplary solvents include water, ethanol, methanol and mixtures of the alcohols with water. Residual monomer contents of less than 1 ppm are said to be reached. However, the described mixing method involves high temperatures of up to 180°C. GB 1 560 765 refers to a heat treatment of particulate PVC at a temperature of 75 to 120°C in the presence of an aliphatic diol. According to the experimental part residual monomer contents between 1 and 24 ppm are obtained. As in DE 26 12 096 A1 the described method requires relatively high temperatures which are unfavorable for the reasons pointed out above.

GB 1 487 820 is directed to a process for removing vinyl halide from a vinyl halide-containing slurry by passing a gas through the slurry and thereby removing vinyl halide therefrom. Examples of suitable gases include nitrogen, air, carbon dioxide, methane, natural gas and combinations thereof with nitrogen being the preferred gas. The process is typically conducted at a temperature of from 50 to 100°C, preferably from 60 to 95°C. As the gas treatment is performed on the slurry it cannot serve to dewater the product and energy-consuming drying step(s) are necessary to obtain the final dry PVC powder. Moreover, the gas treatment itself also involves energy input.

GB 1,172,713; US 6,258,910 B1; WO 02/055567 A2 and WO 2011/073133 A1 describe free radical polymerization of vinyl chloride in liquid or supercritical carbon dioxide. No details of the morphology of the obtained PVC powder are given and US 6,258,910 B1 characterizes the product as submicron-sized highly porous particles. As none of these prior art reference teaches the use of a protective colloid which is essential to generate a reproducible PVC grain morphology, the disclosed polymerization techniques in liquid or supercritical carbon dioxide are obviously not adapted to control the PVC morphology. However, control of the morphology of each PVC grain is the main parameter determining the quality of a commercial PVC. Moreover, WO 2011/073133 A1 discloses a residual monomer content of between 0.2 to 5 % by weight after expansion which requires further degassing steps whereas the other references are silent about residual monomer content.

US 5,530,077 is directed to a multi-phase polymerization process for making a polymer comprising providing a reaction mixture comprising a carbon dioxide phase and a separate aqueous phase and a water-insoluble polymer. In two examples vinyl chloride is polymerized but no results are reported. A control of the grain morphology does not seem to be possible and the process cannot be used for commercial production of PVC.

In view of the drawbacks associated with prior art technology the problem that is addressed by the present invention is to provide a treatment method for a poly(vinyl chloride) composition as obtained from a commercial polymerization process which method can remove or at least reduce residual monomer(s) and/or water and obviates high energy input and high temperatures applied to the poly(vinyl chloride). Moreover, it would be desirable to make available a treatment method for influencing the grain morphology of the poly(vinyl chloride) composition.

The object is solved by a method of treating a poly(vinyl chloride) composition comprising poly(vinyl chloride) particles and obtained by a process selected from suspension polymerization in an aqueous medium, microsuspension polymerization in an aqueous medium, emulsion polymerization in an aqueous medium and bulk polymerization, which method comprises contacting the poly(vinyl chloride) composition with supercritical carbon dioxide (scCO₂), near critical CO₂ or liquid CO₂.

The present invention also relates to a poly(vinyl chloride) composition obtainable by said treatment method.

Further, the present invention is directed to a method for producing a poly(vinyl chloride) composition comprising suspension polymerizing vinyl chloride monomer and optional comonomer(s) in an aqueous medium and treating the resulting poly(vinyl chloride) composition by the above method and the poly(vinyl chloride) composition obtainable therefore.

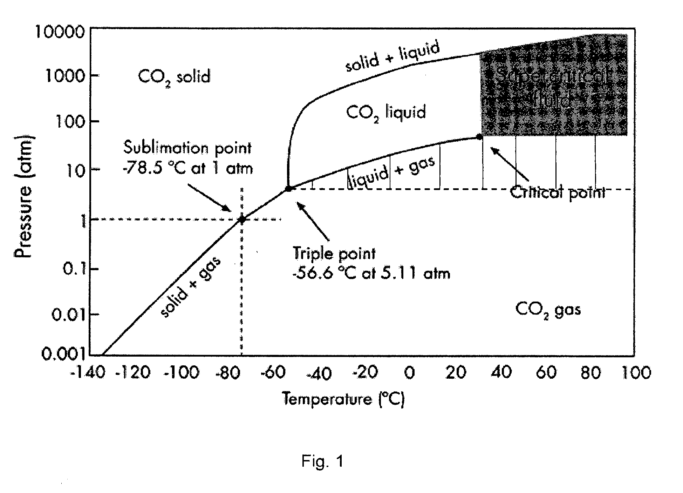

In the present application, the terms "supercritical" and "liquid" are understood in their conventional thermodynamic sense. "Supercritical" denotes conditions of a gas above its critical temperature and critical pressure i.e. above its critical point. Supercritical carbon dioxide (scCO₂) is CO₂ at a temperature above 31.1°C and at a pressure above 7376 kPa. scCO₂ is a fluid state of CO₂ and has properties midway between a gas and a liquid. scCO₂ has a density similar to that of a liquid but a viscosity similar to that of a gas. Liquid carbon dioxide is CO₂ at a temperature between -56.6 and 31.1°C that is under a sufficient pressure to be a liquid but not a solid. In the phase diagram of CO₂ (Fig. 1) the liquid state is defined by the area above the liquid/gas curve from the triple point (518 kPa at - 56.6°C) to the critical point (7376 kPa at 31.1 °C) and below the solid/liquid curve.

"Near critical" CO₂ describes gaseous CO₂ at a temperature above -56.6°C and a pressure above 518 kPa which is neither in the solid, liquid or supercritical state. In the phase diagram of CO₂ as shown Fig. 1 the "near critical" condition corresponds to the hatched area. For ease of conciseness these three modifications of CO₂ are summarized under the term "dense phase CO₂" in the following. "Dense phase CO₂" means supercritical carbon dioxide (scCO₂), near critical CO₂ or liquid CO₂.

Within this application, the term "poly(vinyl chloride)" includes homopolymers of vinyl chloride as well as copolymers of vinyl chloride with up to 60 % by weight, typically up to 30 % by weight, preferably up to 20 % by weight, more preferably up to 17 % by weight (based on total weight of monomers) of one or more comonomers. Typically, the comonomer is selected from vinylidene chloride, vinyl acetate, methyl (meth)acrylate, ethyl (meth)acrylate, propyl (meth)acrylate, butyl (meth)acrylate, t-butyl (meth)acrylate, 2-ethyl hexyl (meth)acrylate, hydroxyalkyl acrylate, (meth)acrylic acid, (meth)acrylonitrile, vinyl isobutyl ether, vinyl fluoride, vinylidene fluoride, maleic anhydride and esters thereof, ethylene, propylene, styrene and butadiene and mixtures thereof. The copolymers may have a statistical or a blocky distribution of monomer units along the polymer chain. Preferably, the poly(vinyl chloride) is selected from a poly(vinyl chloride) homopolymer and copolymers with vinyl acetate, acrylonitrile and/or an alkyl (meth)acrylate such as vinyl chloride/vinyl acetate copolymer, typically comprising 83 to 93 % by weight of polymerized vinyl chloride units and 17 to 7 % by weight of polymerized vinyl acetate units; vinyl chloride/acrylonitrile copolymer, typically comprising 40 to 75 % by weight of polymerized vinyl chloride units and 25 to 60 % by weight of polymerized acrylonitrile units; and vinyl chloride/alkyl (meth)acrylate copolymer, typically comprising 98 to 75% by weight of polymerized vinyl chloride units and 2 to 25 % by weight of polymerized alkyl (meth)acrylate units. Most preferably, the poly(vinyl chloride) is poly(vinyl chloride) homopolymer.

The term "poly(vinyl chloride) composition" as used in the present invention to describe the material that is treated with dense phase CO₂ refers to a composition that consists of poly(vinyl chloride) and optionally impurities such as components that remain from the production process of the poly(vinyl chloride). Typically, the poly(vinyl chloride) composition comprises at least 36 % by weight of poly(vinyl chloride) such as 36 to 99.99 % by weight of poly(vinyl chloride) and 0.01 to 64 % by weight of impurities, more typically at least 45 % by weight of poly(vinyl chloride) such as 45 to 99.99 % by weight of poly(vinyl chloride) and 0.01 to 55 % by weight of impurities, even more typically at least 50 % by weight of poly(vinyl chloride) such as 50 to 99.99 % by weight of poly(vinyl chloride) and 0.01 to 50 % by weight of impurities or at least 55 % by weight of poly(vinyl chloride) such as 55 to 99.99 % by weight of poly(vinyl chloride) and 0.01 to 45 % by weight of impurities or 60 to 99.95 % by weight of poly(vinyl chloride) and 0.05 to 40 % by weight of impurities or 65 to 99.5 % by weight of poly(vinyl chloride) and 0.5 to 35 % by weight of impurities such as remnants from the production process, each based on the total weight of the poly(vinyl chloride) composition.

Accordingly, the term "poly(vinyl chloride) particles" as used in the present invention to describe the material that is treated with dense phase CO₂ is understood to mean particles that consist of poly(vinyl chloride) and optionally impurities such as components that remain from the production process of the poly(vinyl chloride). Typically, the poly(vinyl chloride) particles comprise at least 36 % by weight of poly(vinyl chloride) such as 36 to 99.99 % by weight of poly(vinyl chloride) and 0.01 to 64 % by weight of impurities, more typically at least 45 % by weight of poly(vinyl chloride) such as 45 to 99.99 % by weight of poly(vinyl chloride) and 0.01 to 55 % by weight of impurities, more typically at least 50 % by weight of poly(vinyl chloride) such as 50 to 99.99 % by weight of poly(vinyl chloride) and 0.01 to 50 % by weight of impurities or at least 55 % by weight of poly(vinyl chloride) such as 55 to 99.99 % by weight of poly(vinyl chloride) and 0.01 to 45 % by weight of impurities or 60 to 99.95 % by weight of poly(vinyl chloride) and 0.05 to 40 % by weight of impurities or 65 to 99.5 % by weight of poly(vinyl chloride) and 0.5 to 35 % by weight of impurities such as remnants from the production process, each based on the total weight of the poly(vinyl chloride) particles.

The type of impurities contained in the poly(vinyl chloride) composition/particles depends on the type of production process (such as the specific polymerization method) and kind and number of purification steps that had been applied to the poly(vinyl chloride) composition/particles before subjecting them to the treatment according to the present invention. Typical impurities derived from the production process include vinyl chloride monomer, comonomer(s) as those mentioned above, water, residues form initiators, suspending agents (also called protective colloids or granulating agents) such as poly(vinyl alcohol), partially hydrolyzed poly(vinyl acetate) and cellulose ether derivatives such as hydroxyethyl cellulose, hydroxypropyl cellulose and hydroxypropyl methylcellulose; emulsifiers, buffers, antifoams, build up suppressant residues, antistatic agents, and plasticizing contaminants such as oligomeric by-products derived from vinyl chloride. Those by-products are also known as "low molecular weight PVC" and include various species. Some of them have been described in the thesis by Jindra Purmová, University of Groningen, The Netherlands, April 2007, entitled "Effect of the modification of the polymer-rich phase composition on the formation of structural defects in radical suspension polymerization".

The treatment of pure poly(vinyl chloride) is also encompassed by the present invention.

Generally, the poly(vinyl chloride) composition that is exposed to the dense phase CO₂ had not been subjected to a processing step such a molding including extrusion and calendaring. Typically, the poly(vinyl chloride) composition to be treated with dense phase CO₂ is unmodified which means that it is free of any deliberately added additives that are necessary to process the poly(vinyl chloride) into finished products. Such additives include heat stabilizers, UV stabilizers, lubricants, plasticizers, processing aids, impact modifiers, thermal modifiers, fillers, flame retardants, biocides, blowing agents, smoke suppressors, and pigments. However, it is understood that additives including those mentioned above can be added to the poly(vinyl chloride) composition obtained by the method according to the present invention.

Within this application the term "particle" is understood in its broadest sense and includes non-aggregated particles as well as particles being aggregates of smaller units which aggregates are also known as "grains". Typically, "particles" within the meaning of the present invention have a maximum longest dimension of less than 1 mm, more typically no more than 750 µm such as no more than 500 µm or no more than 400 µm. Preferably, the particles of the poly(vinyl chloride) composition are porous.

Poly(vinyl chloride) particles prepared by suspension polymerization are grains which are the visible constituents of the free flowing powder after drying and are made up of more than one polymerized monomer droplet. The droplets comprise arrangements of agglomerates of primary particles. Depending on the polymerization conditions the grains are more or less porous. Generally, suspension polymerization results in poly(vinyl chloride) grains having a mass median diameter (Dₘ50) within the range of from 25 to 250 µm, typically from 50 to 200 µm.

Microsuspension polymerization generally results in particles having a volume median diameter (Dᵥ50) within the range of from 0.1 to 2.0 µm; emulsion polymerization generally results in a latex comprising primary particles (typically having a volume median diameter (Dᵥ50) within the range of from 0.01 to 3.0 µm such as from 0.02 to 3.0 µm) and finally a dried powder comprising the primary particles and grains (also known as secondary particles) composed of agglomerated primary particles, the grains having a volume median diameter (Dᵥ50) within the range of from 0.1 to 100 µm, typically 30 to 60 µm; and bulk (or mass) polymerization generally results in grains composed of fused primary particles, the grains having a mass median diameter (Dₘ50) within the range of from 80 to 200 µm, typically 130 to 160 µm.

Within this application Dₘ50 refers to the mass median diameter as determined by sieving dry particles using a stack of sieves of the following mesh sizes: 315, 250, 200, 160, 100 and 75 µm and a collecting pan. 12.5 g of the dry particulate material are placed on top of the rack and shaken for 15 minutes. The mass of particulate material in each individual sieve is recorded and each value divided by 12.5 to calculate the percentage of the total mass retained on that sieve size. These values are plotted on a logarithmic graph to create a curve of cumulative mass retained against sieve mesh size and the value at which 50 % of the mass is reached (Dₘ50) is determined. Dᵥ50 refers to the volume median diameter as determined by laser diffraction with a Malvern Mastersizer 2000 using Mie scattering.

The poly(vinyl chloride) that is subjected to the inventive treatment is obtained by a process selected from suspension polymerization in an aqueous medium, microsuspension polymerization in an aqueous medium, emulsion polymerization in an aqueous medium and bulk polymerization wherein each of the polymerization reactions is performed in the absence of scCO₂, liquid or near critical CO₂. In preferred embodiments of the present invention, the poly(vinyl chloride) composition to be treated with dense phase CO₂ is obtained from suspension polymerization in an aqueous medium and is also referred to as "suspension poly(vinyl chloride)" within this application. Suspension polymerization of vinyl chloride monomer or vinyl chloride monomer/comonomer mixtures is well known to the person skilled in the art and the majority of the worldwide commercial production of poly(vinyl chloride) involves suspension polymerization. The principles of poly(vinyl chloride) suspension polymerization are for example outlined in Ullmann's Encyclopedia of Industrial Chemistry, 5th Edition, 1992, pages 717 to 729 and Burgess, R.H., Chapter 6 in Manufacturing and Processing of PVC, Burgess, R.H. (Ed.), Applied Science Publishers Ltd, 1982.

The poly(vinyl chloride) composition subjected to the present dense phase CO₂ treatment can also be obtained by a process selected from microsuspension polymerization in an aqueous medium, emulsion polymerization in an aqueous medium and bulk polymerization which polymerization methods are also well-known to the skilled person and, for example, described in Allsopp, M.W., R.H., Chapter 2 in Manufacturing and Processing of PVC, Burgess, R.H. (Ed.), Applied Science Publishers Ltd, 1982 and Evans, D.E.M., Chapter 3 in Manufacturing and Processing of PVC, Burgess, R.H. (Ed.), Applied Science Publishers Ltd, 1982.

In a suspension polymerization process vinyl chloride and optional comonomer(s) are polymerized by free radical polymerization in an aqueous medium, preferably water, more preferably demineralized water, in the presence of a free radical initiator and at least one protective colloid ("primary protective colloid"). Suspension polymerization is essentially a bulk polymerization carried out in millions of small reactors which are the droplets in water. Liquid vinyl chloride under its autogenous vapor pressure and optional comonomer(s) together with initiator and protective colloid(s) (suspending agents, granulating agents) are dispersed in water by stirring in a reactor, typically an autoclave. This results in the formation of droplets which are stabilized against catastrophic aggregation, but often with controlled coalescence by one or more protective colloids. The free radical initiator must be soluble in the monomer(s). A typical basic recipe for the suspension polymerization process is for example: 100 parts by weight of monomer(s) (vinyl chloride and optional comonomer(s)), 85 to 130 parts by weight, such as 90 to 130 parts by weight of water, 0.04 to 0.22 parts by weight, such as 0.05 to 0.15 parts by weight of protective colloid, and 0.03 to 0.15 parts by weight, such 0.03 to 0.12 parts by weight or 0.03 to 0.10 parts by weight of initiator. In order to improve the morphology of the poly(vinyl chloride) grains obtained further additives can be added which include secondary and tertiary protective colloids, buffers, oxygen, chain-transfer or chain extending agents, and chain-terminators (antioxidants), and build up suppressants. The main function of the primary protective colloids is to control the grain size but they also affect porosity and other morphological properties. Using a secondary protective colloid in addition to the primary protective colloids helps to achieve a higher and more uniform porosity within each grain. Examples of typical protective colloids (including primary, secondary and tertiary protective colloids) include poly(vinyl alcohol), partially hydrolyzed poly(vinyl acetate) and cellulose ether derivates such as hydroxyethyl cellulose, hydroxypropyl cellulose and hydroxypropyl methylcellulose. Specific examples of protective colloids are listed in Ullmann's Encyclopedia of Industrial Chemistry, 5th Edition, 1992, page722, Table 3. A range of free radical initiators soluble in the monomer(s) can be used in suspension and mass polymerization and includes diacetyl peroxides, peroxydicarbonates, and alkyl peroxyesters as well as azo initiators and benzoyl peroxide. Mixtures of different initiators can also be used. Specific examples of initiators are listed in Ullmann's Encyclopedia of Industrial Chemistry, 5th Edition, 1992, page723, Table 4. Usually, water, protective colloid(s) and further optional additives are charged to the reactor first and then the liquefied vinyl chloride monomer and optional comonomer(s) are added. Optionally, the charging of the protective colloid may be simultaneous with the vinyl chloride monomer into a preheated reactor containing some or all of the aqueous phase. Optionally, the initiator is then charged to the reactor. Typically, the reactor inside wall have been coated with a build up suppressant to prevent adhesion of the poly(vinyl chloride) to the walls. The initiator can be added together with the water and protective colloid(s) or following the introduction of the monomer(s). After or during charging the reactor contents are heated to a temperature of 40 to 75°C which causes some of the initiator to decompose. The strongly exothermic reaction is controlled by removing heat, for example via a jacket, an internal coil or a condenser. Stirring is continued throughout the reaction. Additional aliquots of water may be added to control the exotherm, optionally additional aliquots of protective colloid or antifoam may be added to the reactor to control dry foam and/or to enhance the bulk density of the PVC. At a conversion of typically 80 to 95 % such as 80 to 90 % the reaction is terminated, typically at a predetermined pressure, usually by adding a chain terminator and/or venting off the unreacted monomer, typically to a monomer recovery unit, in order to obtain a slurry (suspension) of poly(vinyl chloride) particles in the aqueous medium. After venting the poly(vinyl chloride) composition generally still contains 1 to 4 % % by weight of residual monomer(s), typically vinyl chloride, based on the weight of poly(vinyl chloride).

According to a conventional suspension polymerization process of vinyl chloride and optional comonomer(s) used for commercial production, the slurry of poly(vinyl chloride) particles in the aqueous medium is stripped with steam to reduce the amount of residual monomer(s). Since the inventive method of treating the poly(vinyl chloride) composition with dense phase CO₂ is highly effective in removing residual monomer(s), typically vinyl chloride, from the poly(vinyl chloride) composition the steam stripping step or a similar purification step applied to the suspension (or microsuspension, emulsion or bulk in case of other polymerization techniques) is not necessary to produce poly(vinyl chloride) with an acceptable low amount of residual monomer(s), typically vinyl chloride. Generally, a poly(vinyl chloride) composition that has not been subjected to a purification step for reducing/removing residual monomer(s), such as steam stripping of the slurry (suspension) of poly(vinyl chloride) particles, comprises residual monomer(s), typically, vinyl chloride, in an amount of 1 to 4 % by weight such as 2 to 3 % by weight, based on the weight of poly(vinyl chloride) and after thermal drying described below the amount of residual monomer(s) can be reduced to 10 to 1000 ppm (w/w of poly(vinyl chloride). However, the inventive treatment with dense phase CO₂ has further effects in addition to reducing the amount of residual monomer(s) and therefore, there might be reasons to apply the dense phase CO₂ treatment of the present invention to a poly(vinyl chloride) composition prepared by a process including a purification step to reduce residual monomer(s), such as steam stripping the slurry of poly(vinyl chloride) particles. Such a low monomer poly(vinyl chloride) composition usually comprises 1 to 10 ppm (w/w) of residual monomer(s), typically vinyl chloride, before thermal drying and typically <1 ppm after thermal drying each based on the weight of the poly(vinyl chloride).

In the next step the poly(vinyl chloride) slurry is subjected to mechanical separation, typically centrifugation, to remove the aqueous suspension medium from the poly(vinyl chloride) particles. The resulting poly(vinyl chloride) composition is called "wet cake" and still comprises 10 to 40 % by weight of water such as 20 to 30 % by weight, each based on the total weight of the poly(vinyl chloride) composition. The amount of water retained in the wet-cake depends upon the porosity of the poly(vinyl chloride) particles (grains). According to the conventional suspension polymerization process used for commercial production the wet cake is subjected to thermal drying (dewatering) to remove the water. The temperature and length of time for this process is dependant upon the porosity of the PVC grains. Since the inventive method of treating the poly(vinyl chloride) composition with dense phase CO₂ is highly effective in removing water from the poly(vinyl chloride) composition thermal drying of the wet cake is not necessary to produce poly(vinyl chloride) with an acceptable low amount of water. However, the inventive treatment with dense phase CO₂ has further effects in addition to reducing the amount of water and therefore, there might be reasons to apply the dense phase CO₂ treatment of the present invention to a poly(vinyl chloride) composition prepared by a process including a thermal drying step. Any type of drier suitable for isolating granular materials of mean sizes from 30 µm to 1 mm can be used. Examples of suitable driers include rotary driers, flash driers, fluidized bed driers and combined flash/long residence driers. Generally, drying temperatures range from 50 to 140°C, such as from 50 to 90°C and drying times vary depending on the drying temperate and often range from 2 to 2000 s or even longer. Drying temperatures in excess of 80°C for any extended time period such as 10 min or more are undesirable because they promote discoloration. A thermally dried poly(vinyl chloride) composition usually comprises 0.1 to 0.2 % by weight of water, based on the weight of the poly(vinyl chloride) composition. Typically, the dry poly(vinyl chloride) is in the form of a powder.

Accordingly, the composition of the poly(vinyl chloride) compositions to be treated by the method of the present invention may vary depending on how the poly(vinyl chloride) composition has been produced.

Typically, the poly(vinyl chloride) composition treated by the present method consists of 36 to 99.99 % by weight of poly(vinyl chloride) and 0.01 to 64 % by weight of impurities comprising 0.01 to 62 % by weight of water, each based on the total weight of the poly(vinyl chloride) composition, and up to 4 % by weight such as 0.0001 to 4 % by weight of residual monomer(s), typically vinyl chloride, based on the weight of poly(vinyl chloride). More typically, the poly(vinyl chloride) composition treated by the present method consists of 45 to 99.99 % by weight of poly(vinyl chloride) and 0.01 to 55 % by weight of impurities comprising 0.01 to 51 % by weight of water, each based on the total weight of the poly(vinyl chloride) composition, and up 4 % by weight such 0.0001 to 4 % by weight of residual monomer(s), typically vinyl chloride, based on the weight of poly(vinyl chloride). Even more typically, the poly(vinyl chloride) composition treated by the present method consists of 55 to 99.99 % by weight of poly(vinyl chloride) and 0.01 to 45 % by weight of impurities comprising 0.01 to 40 % by weight of water, each based on the total weight of the poly(vinyl chloride) composition, and up to 4 % by weight such as 0.0001 to 4 % by weight of residual monomer(s), typically vinyl chloride, based on the weight of poly(vinyl chloride).

In one embodiment, the poly(vinyl chloride) composition treated by the present method consists of 55 to 89 % by weight, typically 65 to 78 % by weight of poly(vinyl chloride) and 11 to 45 % by weight, typically 22 to 35 % by weight of impurities comprising 10 to 40 % by weight, typically 20 to 30 % by weight of water, each based on the total weight of the poly(vinyl chloride) composition, and 1 to 4 % by weight, typically 2 to 3 % by weight of residual monomer(s), typically vinyl chloride, based on the weight of poly(vinyl chloride). ("wet cake", high in residual monomer(s))

In another embodiment, the poly(vinyl chloride) composition treated by the present method consists of 97 to 99.99 % by weight of poly(vinyl chloride) and 0.01 to 3 % by weight of impurities comprising 0.01 to 0.4 % by weight, such as 0.04 to 0.3 % by weight or 0.06 to 0.2 % by weight, of water, each based on the total weight of the poly(vinyl chloride) composition, and 10 to 10000 ppm w/w such as 10 to 1000 ppm w/w of residual monomer(s), typically vinyl chloride, based on the weight of poly(vinyl chloride). ("dry powder", high in residual monomer(s))

In a further embodiment, the poly(vinyl chloride) composition treated by the present method consists of 58 to 90 % by weight of poly(vinyl chloride) and 10 to 42 % by weight of impurities comprising 10 to 40 % by weight, typically 20 to 30 % by weight of water, each based on the total weight of the poly(vinyl chloride) composition, and 1 to 10 ppm w/w of residual monomer(s), typically vinyl chloride, based on the weight of poly(vinyl chloride). ("wet cake", low in residual monomer(s))

In still another embodiment, the poly(vinyl chloride) composition treated by the present method consists of 98 to 99.99 % by weight of poly(vinyl chloride) and 0.01 to 2 % by weight of impurities comprising 0.01 to 0.4 % by weight, such as 0.04 to 0.3 % by weight or 0.06 to 0.2 % by weight, of water, each based on the total weight of the poly(vinyl chloride) composition, and equal to or less than 1 ppm w/w of residual monomer(s), typically vinyl chloride, based on the weight of poly(vinyl chloride). ("dry powder", low in residual monomer(s))

Irrespective of the type of polymerization technique applied (suspension, microsuspension, emulsion or bulk polymerization) and the amount of impurities contained in the poly(vinyl chloride) composition, the poly(vinyl chloride) composition as obtained comprises particles of poly(vinyl chloride) having varying sizes and morphologies as described before.

The inventive method of treating the poly(vinyl chloride) composition including those according to the embodiments above comprises contacting the poly(vinyl chloride) composition with supercritical carbon dioxide (scCO₂), near critical CO₂ or liquid carbon dioxide. It is preferred to contact the poly(vinyl chloride) composition with scCO₂. The contact may be performed in the presence of a modifier fluid in an amount of up to 50 % by volume, such as 0.1 to 50% by volume, preferably 4 to 10% by volume, more preferably 5% by volume, based on the total volume of dense phase CO₂ and modifier. Exemplary modifiers are alkanes (such as ethane, propane, butane), inorganic liquids such as SF₆, alcohols (such as methanol, ethanol, n-propanol, isopropanol), organic solvents (such as acetone, tetrahydrofuran, cyclohexanone, dichloromethane, dichloroethane), and ionic liquids, as well as mixtures thereof.

Typically, the present method is performed in a pressure vessel comprising heating facilities such as an autoclave.

"Contacting" is understood in the broadest sense and includes quiescent contact, contact under agitation, and contact with flowing dense phase CO₂, preferably scCO₂, which is also called "purging" (also known as "flushing" or "sparging").

The dense phase CO₂ may be present in any effective amount with respect to the poly(vinyl chloride) composition. Preferably, the dense phase CO₂, preferably scCO₂ is provided at a desired concentration in the reaction vessel to give a desired effect upon the polymer. For example, in a batch experiment such range may be from 1 % to 200 % by weight, based on the weight of the poly(vinyl chloride) composition. Exemplary flow rates of the dense phase CO₂, such as scCO₂, are 0.05 to 20 ml/min or 0.1 to 10 ml/min or 1 to 5 ml/min.

Generally, the contact between the poly(vinyl chloride) composition and scCO₂ is effected by first introducing the poly(vinyl chloride) composition into the vessel and then introducing scCO₂ into the vessel and maintaining the temperature and pressure in said vessel above the critical point of CO₂. Alternatively, the CO₂ fluid can be either in the gaseous state or in the liquid state when it is introduced into the vessel. The temperature and pressure of the vessel are adjusted to above the critical point of the CO₂ so as to convert the CO₂ to scCO₂. After a certain contact time the pressure is released, usually slowly released. Foaming of the poly(vinyl chloride) composition may occur if the pressure is released quickly. The contact between the poly(vinyl chloride) composition and the near critical or liquid CO₂ is performed in a similar manner under adequate pressure and temperature conditions.

The contacting with dense phase CO₂, preferably scCO₂, can also be performed in a continuous or semicontinuous manner.

Suitable apparatus in which the inventive treatment with dense phase CO₂, preferably scCO₂, can be performed are well-known in the art and, for example, described in Licence, P.L. et al, Review of Scientific Instruments, 3233-3236, 75(10), 2004. Suitable autoclaves are commercially available, for example from SEPAREX S.A., France.

The specific temperature and pressure conditions as well as the duration of contacting the poly(vinyl chloride) composition with dense phase CO₂, preferably scCO₂ can vary depending on the exact composition and the amount as well as the particle morphology of the poly(vinyl chloride) composition to be treated and the effect to be achieved. The geometry of the vessel also influences contact conditions. Typical contact periods range from 1 millisecond to 5 hours, preferably from 1 second to 4 hours, more preferably from 1 to 180 min. It is understood that both pressure and temperature need not necessarily be kept constant but may vary within the contact period.

For scCO₂ usually a pressure within the range of from > 7.38 to 1,000 MPa, typically of from 7.4 to 100 MPa, such as from 7.5 to 40 MPa or from 7.8 to 30 MPa or from 8 to 20 MPa or from 10 to 15 MPa is applied. Generally, the temperature within the vessel is adjusted to a value within the range of from > 31 to 100°C, such as from 35 to 90°C or from 40 to 85°C or from 40 to 80°C.

For near critical CO₂ usually a pressure within the range of from > 518 kPa to 7.38 MPa, such as from 1.0 to 7.2 MPa or from 2.0 to 5.0 MPa is applied. Generally, the temperature within the vessel is adjusted to a value within the range of from > -56.6 to 100 °C, such as from -20 to 95°C or from -10 to 85°C.

For liquid CO₂ usually a pressure within the range of from > 518 kPa to 700 MPa, such as from 1.0 to 20.0 MPa or from 2.0 to 15.0 MPa is applied. Generally, the temperature within the vessel is adjusted to a value within the range of from > -56.6 to 31 °C, such as from -40 to 30°C or from -20 to 28°C.

In some embodiments the contacting is followed by a step of recovering the CO₂ and/or the residual monomer(s), typically vinyl chloride, if present in the CO₂, and recycling the CO₂ and/or the residual monomer(s). Recycling is for example described in WO 2011/073133 A1 and US 2004/0087741 A1.

The effects on the poly(vinyl chloride) composition that are achieved by the inventive dense phase CO₂ treatment, preferably scCO₂ treatment are diverse and include further unexpected effects in addition to those already mentioned. All of them will be described in more detail below.

### Reduction of residual monomer(s)

The method of the present invention can be used to reduce the amount of residual monomer(s), typically vinyl chloride, or remove residual monomer(s) from the poly(vinyl chloride) composition. Hence, the present invention is also directed to a method for reducing the amount of residual monomer(s), typically vinyl chloride, in a poly(vinyl chloride) composition as defined above by contacting the poly(vinyl chloride) composition with dense phase CO₂, preferably scCO₂ as described above. In some embodiments the amount of residual monomer(s), typically vinyl chloride, is reduced to no more than 50 ppm w/w such as no more than 10 ppm w/w or no more than 1 ppm w/w or no more than 0.1 ppm w/w or no more than 0.01 ppm w/w meaning that the poly(vinyl chloride) composition obtained by the method of the present invention comprises no more than 50 ppm w/w such as no more than 10 ppm w/w or no more than 1 ppm w/w or no more than 0.1 ppm w/w or no more than 0.01 ppm w/w of residual monomer(s), typically vinyl chloride, based on the weight of the poly(vinyl chloride) composition. Using the present treatment method poly(vinyl chloride) having a very low monomer content can be produced without subjecting the poly(vinyl chloride) slurry in a suspension polymerization process to energy-consuming steam stripping. Thus, the present invention also encompasses a process for producing poly(vinyl chloride) comprising suspension polymerizing vinyl chloride monomer and optional comonomer(s) in an aqueous medium and contacting the resulting poly(vinyl chloride) composition with dense phase CO₂, preferably scCO₂ as described before and preferably excluding a step wherein the suspension of poly(vinyl chloride) is stripped with steam.

### Reduction of water content

The method of the present invention can be used to reduce the amount of water or remove water from the poly(vinyl chloride) composition. Hence, the present invention is also directed to a method for reducing the amount of water in a poly(vinyl chloride) composition as defined above by contacting the poly(vinyl chloride) composition with dense phase CO₂, preferably scCO₂ as described above. Preferably, the poly(vinyl chloride) composition is purged with dense phase CO₂, preferably scCO₂ in order to remove/reduce the water content. Purging with dense phase CO₂ is able to remove the water that is held in the irregularities on the surface of the grains as a result of surface tension forces and in the small menisci trapped by surface tension forces between the grains they touch as well as water entrained in the pores of the grains. In some embodiments the amount of water is reduced to no more than 0.4 % by weight, preferably no more than 0.3 % by weight and more preferably no more than 0.2 % by weight meaning that the poly(vinyl chloride) composition obtained by the method of the present invention comprises no more than 0.4% by weight, preferably no more than 0.3 % by weight and more preferably no more than 0.2 % by weight of water, based on the weight of poly(vinyl chloride) composition. Using the present treatment method poly(vinyl chloride) having a low water content can be produced without subjecting the wet cake of poly(vinyl chloride) in a suspension polymerization process to energy-consuming thermal drying. Thus, the present invention also encompasses a process for producing poly(vinyl chloride) comprising suspension polymerizing vinyl chloride monomer and optional comonomer(s) in an aqueous medium and contacting the resulting poly(vinyl chloride) composition with dense phase CO₂, preferably scCO₂ as described before, but excluding a step wherein the wet cake of poly(vinyl chloride) is subjected to thermal drying. More preferably, the process for producing poly(vinyl chloride) comprises suspension polymerizing vinyl chloride monomer and optional comonomer(s) in an aqueous medium and contacting the resulting poly(vinyl chloride) composition with dense phase CO₂, preferably scCO₂ as described before, but excludes both a step wherein the wet cake of poly(vinyl chloride) is subjected to thermal drying and a step wherein the suspension of poly(vinyl chloride) is stripped with steam.

### Reduction of plasticizing contaminants

The method of the present invention can also be used to reduce the amount of plasticizing contaminants or remove plasticizing contaminants from the poly(vinyl chloride) composition. Hence, the present invention is also directed to a method for reducing the amount of plasticizing contaminants in a poly(vinyl chloride) composition as defined above by contacting the poly(vinyl chloride) composition with dense phase CO₂, preferably scCO₂ as described above. The present inventors have observed that the dense phase CO₂ treatment, preferably scCO₂ treatment, according to the invention can increase the glass transition temperature of the poly(vinyl chloride) composition by removing/reducing low molecular weight species which have a plasticizing effect on the poly(vinyl chloride) composition. Those plasticizing contaminants have not yet been analyzed and are assumed to include species resulting from the oxidation of vinyl chloride with oxygen as for example described by E. N. Zilberman in J.M.S.-Rev. Macromol. Chem. Phys., C32(2), 235-257 (1992) or the low molecular weight species described in the thesis by Jindra Purmová, University of Groningen, The Netherlands, April 2007, entitled "Effect of the modification of the polymer-rich phase composition on the formation of structural defects in radical suspension polymerization". Thus, the present invention is also directed to a method for increasing the glass transition temperature of a poly(vinyl chloride) composition as defined above by contacting the poly(vinyl chloride) composition with dense phase CO₂, preferably scCO₂ as described above. Moreover, the inventive scCO₂ treatment can improve the thermal stability of the poly(vinyl chloride) composition due to the removal/reduction of low molecular weight contaminants. Thus, the present invention is also directed to a method for increasing the thermal stability of a poly(vinyl chloride) composition as defined above by contacting the poly(vinyl chloride) composition with dense phase CO₂, preferably scCO₂ as described above. scCO₂ treatment temperatures for removing low molecular weight contaminants or at least reducing the amount thereof are typically higher than 40°C such as at least 50°C or at least 60°C, preferably at least 70°C such as from 70 to 85°C.

### Modification of grain morphology

It has been found out by the present inventors that the inventive treatment with dense phase CO₂, preferably scCO₂ quite surprisingly also influences the morphology of the poly(vinyl chloride) grains, especially those obtained from a suspension polymerization process, in several aspects. Accordingly, the method of the present invention can be used to modify the morphology of the poly(vinyl chloride) grains comprising aggregated primary poly(vinyl chloride) particles. Hence, the present invention is also directed to a method for modifying the morphology of the poly(vinyl chloride) particles which are poly(vinyl chloride) grains in a poly(vinyl chloride) composition as defined above by contacting the poly(vinyl chloride) composition with dense phase CO₂, preferably scCO₂ as described above.

Evaluating the scanning electron micrographs of dense phase CO₂, preferably scCO₂ treated poly(vinyl chloride) grains such as suspension poly(vinyl chloride) grains, it has further been observed that the grains have become more defined i.e. their surface has become less nodular/knobby and more creased. Accordingly, the method of the present method can be used to smooth the surface of the poly(vinyl chloride) grains. Hence, the present invention is also directed to a method for smoothing the surface of the poly(vinyl chloride) particles which are poly(vinyl chloride) grains in a poly(vinyl chloride) composition as defined above by contacting the poly(vinyl chloride) composition with dense phase CO₂, preferably scCO₂ as described above. Smoother grains with less surface roughness are less friable because they show less denudation effects when rubbing together. As a result less dust will be generated.

Without being bound to a specific theory it is believed that the smoothing of the surface is due to the plasticizing effect the dense phase CO₂ such as scCO₂ has on the poly(vinyl chloride) grains. Although dense phase CO₂ such as scCO₂ does not dissolve poly(vinyl chloride) it swells the poly(vinyl chloride) grains.

Moreover, it has been observed that the inventive dense phase CO₂ treatment, preferably scCO₂ treatment has an influence on the porosity of the poly(vinyl chloride) grains, especially those obtained from a suspension polymerization process, and therefore, the present method can be used to influence/change the porosity of the grains. Hence, the present invention is also directed to a method for influencing/changing the porosity of the poly(vinyl chloride) particles which are poly(vinyl chloride) grains in a poly(vinyl chloride) composition as defined above by contacting the poly(vinyl chloride) composition with dense phase CO₂, preferably scCO₂ as described above. Porosity is determined by cold plasticizer absorption (CPA).

Since the inventive dense phase CO₂, preferably scCO₂ treatment indeed changes the morphology of the poly(vinyl chloride) grains, the present method gives access to novel poly(vinyl chloride) compositions having hitherto unknown properties. Thus, the present invention is also directed to a poly(vinyl chloride) composition obtainable by the present method including all embodiments disclosed above.

Some embodiments of the invention will now be described in detail in the following examples.

### EXAMPLES

### Preparation of poly(vinyl chloride) compositions (Samples A - H)

Various samples of a poly(vinyl chloride) composition were prepared on the basis of the following recipe:

| | |
|---|---|
| Demineralized water | 350 g |
| Vinyl chloride monomer | 189 g |
| Di(4-tert-butylcyclohexyl) peroxydicarbonate, 40 wt % aqueous dispersion diluted to 4 wt % | 1,000 ppm w/w solids on vinyl chloride |
| Primary suspending agent Alcotex® B72 (supplied by Synthomer Ltd.), poly(vinyl alcohol) having a degree of hydrolysis of 72.0-74.0 mole % and a block distribution of acetate groups, 4 % aqueous solution | 900-1,400 ppm w/w solids on vinyl chloride |
| Secondary suspending agent Alcotex® 552P (supplied by Synthomer Ltd.), partially hydrolyzed poly(vinyl acetate) having a degree of hydrolysis of about 55 mole % and a random distribution of acetate groups, 40 % aqueous solution | 450 ppm w/w solids on vinyl chloride |
| Sodium bicarbonate (1 wt % solution in demineralized water) | 300-600 ppm w/w solids on vinyl chloride |

Demineralized water, suspending agents, buffer and initiator were all charged to a 1 litre Büchi stainless steel reactor (which had been previously coated with Alcotex® 225 Build-Up suppressant supplied by Synthomer Ltd.) and assembled onto the rig. The recipes of runs 1 to 4 shown in Table 1 were designed to give a final grain size that was consistent with a typical commercial product. The reactor was then pressure tested, degassed to atmospheric and then vinyl chloride monomer charged via a volumetric bomb under nitrogen pressure. A suspension of vinyl chloride was prepared under stirring with about 750 rpm. The reactor was then heated within 6 minutes under agitation at 750 rpm to the desired polymerization temperature within the range of from 57 to 70°C as indicated in Table 1 below, stirring with about 750 rpm was continued, the maximum pressure was recorded and the reaction stopped after a pressure drop of 0.2 MPa (by cooling and degassing to atmospheric pressure). The reactor was then subjected to a vacuum of approximately 50 kPa for 45 minutes. The reactor contents were then decanted in to a filter funnel and washed twice with 1 wt % sodium lauryl sulphate solution (as an anti-static treatment). Approximately half of the sample was then placed in a circulating fan oven at 50°C for 12 hours to dry. A PVC analysis was then carried out and the results are shown in Table 1. The other half of the sample was not dried and maintained in the wet state.

**Table 1**

| | Run No. 1 | | Run No. 2 | | Run No. 3 | | Run No. 4 | |
|---|---|---|---|---|---|---|---|---|
| Polymerization Temperature | 57°C | | 57°C | | 70°C | | 70°C | |
| Primary suspending agent (ppm) | 900 | | 1300 | | 1200 | | 1400 | |
| Secondary suspending agent (ppm) | 450 | | - | | 450 | | - | |
| Sodium bicarbonate (ppm) | 300 | | 600 | | 600 | | 500 | |
| pH at termination | 2.97 | | 7.87 | | 7.83 | | 7.87 | |
| Yield (g) | 125.7 | | 129 | | 107.4 | | 118.1 | |
| Description of polymer | medium molecular weight (K∼67) | | medium molecular weight (K∼67) | | low molecular weight (K∼57) | | low molecular weight (K∼57) | |
| Grain size Dₘ50* (µm) | 130.9 | | 119.3 | | 133.4 | | 135.4 | |
| Grain porosity CPA** (%) | 29.4 | | 21.8 | | 16.56 | | 11.53 | |
| Sample ID | A | G | D | E | C | H | B | F |
| Status | dry | wet | dry | wet | dry | wet | dry | wet |

| | | | | | | | | |
|---|---|---|---|---|---|---|---|---|
| * Dₘ50 was determined as described in the general part of the description. ** CPA (cold plasticizer absorption) was determined as follows: 2.5 g of the dry PVC sample and 4 g of dioctylphthalate were carefully weighed into a vessel containing a membrane. The vessel was then placed in a jacket, put into a centrifuge and spun at 10000 rpm for 60 minutes. The vessel was then reweighed and the mass of absorbed dioctylphthalate determined. This value is then divided by the mass of PVC sample to give the final CPA value in %. | | | | | | | | |

### ScCO₂ treatment

Samples A to H were then treated with scCO₂ in an apparatus that was designed and built by the University of Nottingham, and has been described in detail in Licence, P. et al, Review of Scientific Instruments, 3233-3236, 75(10), 2004, the core of the phase analyzer system is the high pressure variable-volume view cell. The view cell is cylindrical in profile, fabricated from stainless steel (316 SS) and is itself composed of three major parts, a cell body, a static window-holder, and a hydraulic ram fitted with a transparent sapphire piston. The entire contents of the cell can be easily observed through the large aperture sapphire windows. The main view cell body has a length of 145.00 mm and outer diameter of 110.00 mm, the internal diameter of the cell is 36.05 mm. The internal volume of the autoclave is adjusted to 60 ml. The cell body incorporates three service ports (located normal to one another). Two of the ports (diameter =3.18 mm) are located horizontally at the midpoint of the vessel to enable material to be introduced into the system and the monitoring of both the pressure (RDP Electronics, type A-1 05 transducer, 10 000 psi max (103.4 MPa)) and internal temperature (RS, 316 SS sheathed K-type thermocouple, diameter =1.5 mm) of the analyzer. The third port, located at the top of the cell, is fitted with a purge needle valve that forms part of the safety interlock system. A scCO₂ flow needed to "purge" the samples was achieved by opening and throttling the exit valve to maintain the desired pressure. The equipment used did not have a set flow and was calibrated manually. The flow rate in all experiments was estimated at 1 to 5 ml/min.

0.5 g of the wet and clumped samples F and H were each purged with scCO₂ at 40°C and 10.34 MPa for 5, 10 and 15 min. After the 5 min purge dry but still clumpy poly(vinyl chloride) grains were obtained. The products of the 10 min purge still contained some clumps. Completely free-flowing and dry powders which showed no signs of lumps and contained well-defined poly(vinyl chloride) grains were obtained after 15 min of purging. Sample H purged for 5 min and 15 min, respectively, were subjected to differential scanning calorimetry (DSC) and the DSC traces indicate dryness of both samples because "ice" and "boiling" peaks were absent.

0.5 g of samples E, F, G, and H were each purged with scCO₂ at 40°C and 10.34 MPa for 15 min. The samples were examined for the amount of residual vinyl chloride monomer prior to and after purging with scCO₂ by a solid phase microextraction technique based on dichloromethane as the internal standard. 0.25 g of the PVC sample was dissolved in 10 ml of cyclohexanon in a 20 ml headspace vial. Vinyl chloride monomer was extracted from the headspace of the vial using a Carboxen®/Polydimethylsiloxane SPME fibre at 50°C for 30 min. The SPME fibre was then desorbed for 3 min in a Shimadzu GC-MS injector and run using a 60M ZB-1 MS column. A set of dichloromethane standards were prepared in the range of 100-0.1 ppm and were injected directly onto the Shimadzu GC-MS and run in the same way. The results of the gas chromatography mass spectrometry (GC/MS) analysis after extraction can be found in Table 2.

**Table 2**

| | Amount of vinyl chloride monomer in ppm w/w based on solid content of PVC sample | |
|---|---|---|
| Sample ID | Pre-scCO₂ exposure | Post-scCO₂ exposure |
| E | 1445 | 15 |
| F | 218 | 20 |
| G | 489 | Not detected |
| H | 100 | 43 |

As can be seen from Table 2 all of the samples show a significant decrease in residual vinyl chloride monomer level following exposure to scCO₂.

0.5 g of samples A, B, C and D were each purged with scCO₂ at 40°C, 70°C and 82°C and 10.34 MPa for 15 min. The glass transition temperature of each sample was measured prior to and after purging with scCO₂ according to the method described below. The results can be found in Table 3.

**Table 3**

| | Glass transition temperature Tg2 /°C | | | |
|---|---|---|---|---|
| Sample ID | Pre-scCO₂ exposure | Post-scCO₂ exposure at 40°C | Post-scCO₂ exposure at 70°C | Post-scCO₂ exposure at 82°C |
| A | 84.39 | 81.96 | 84.04 | 85.19 |
| B | 81.9 | 81.95 | 81.85 | 82.98 |
| C | 81.96 | 82.24 | 83.08 | nd |
| D | 84.7 | 84.13 | 86.53 | nd |

| | | | | |
|---|---|---|---|---|
| nd = not determined | | | | |

### Determination of glass transition temperature

The samples were first cooled to -10°C and then heated to 150°C. The samples were then cooled again to -10°C and then heated to 150°C to determine the glass transition temperature designated as Tg2. The heating and cooling rates were both 10 K/min and there were 5 min isothermals. The equipment used was a DSCQ2000 V24.9 build 121 with a TA instrument DSC refrigerated cooling system. The following protocol was used to calculate the glass transition temperature which is defined as the midpoint of glass transition in the heat capacity curve from the DSC experiment calculated from extrapolating the DSC trace above and below the glass transition process. Lines are extrapolated from below the process and above the process (this then takes out the error caused by the change in start and finish of the slope), and a line is drawn down the best fit of the slope indicating the glass transition process. The length of the slope is then measured from extrapolated line above the process to extrapolated line below and defined as L. The midpoint of the glass transition process is then defined as L/2, and a vertical line dropped down to reveal the temperature at which the midpoint of the glass transition process has occurred (= glass transition temperature).

The data of the samples prior to scCO₂ treatment demonstrate that the PVC prepared at 57°C (Samples A and D) had a higher Tg2 than that prepared at 70°C (Samples B and C) which is due to the higher molecular weight obtained at lower polymerization temperatures. For each of the samples A to D an increase in Tg2 was observed after scCO₂ treatment at 70°C or 82°C with Tg2 progressively increasing as the treatment temperature was increased. Passing the samples through a first cooling and heating step and then subjecting the samples to a second cooling and reheating step resulted in a glass transition process and a Tg2 which is now independent of any artefacts from the sample preparation, but which reflects the removal of the plasticizing contaminants by the scCO₂. The higher the treatment temperature, then the higher is the resultant Tg2, i.e. the more of the plasticizing contaminant were extracted.

## Claims

1. A method of treating a poly(vinyl chloride) composition comprising poly(vinyl chloride) particles and obtained by a process selected from suspension polymerization in an aqueous medium, microsuspension polymerization in an aqueous medium, emulsion polymerization in an aqueous medium and bulk polymerization, which method comprises contacting the poly(vinyl chloride) composition with supercritical carbon dioxide (scCO₂), near critical CO₂ or liquid CO₂.

2. The method of claim 1, wherein the poly(vinyl chloride) composition is contacted with scCO₂.

3. The method of claims 1 or 2, wherein the poly(vinyl chloride) composition is obtained by suspension polymerization in an aqueous medium.

4. The method of any of one of claims 1 to 3, wherein the poly(vinyl chloride) composition is purged with scCO₂, near critical CO₂ or liquid CO₂, preferably scCO₂.

5. The method of any one of claims 1 to 4, wherein the poly(vinyl chloride) composition comprises 10 to 40 % by weight of water, based on the total weight of the poly(vinyl chloride) composition.

6. The method of any one of claims 1 to 4, wherein the poly(vinyl chloride) composition comprises less than 10 % by weight, preferably 0.01 to 10 % by weight, more preferably 0.01 to 0.4 % by weight of water, each based on the total weight of the poly(vinyl chloride) composition.

7. The method of any one of claims 1 to 6, wherein the poly(vinyl chloride) composition comprises 0.001 to 4% by weight of residual monomer(s), typically vinyl chloride, based on the weight of poly(vinyl chloride).

8. The method of claim 5 or claim 7 referring to claim 5 for reducing the amount of water or removing water from the poly(vinyl chloride) composition.

9. The method of any one of claims 7 or 8 referring to claim 7 for reducing the amount of residual monomer(s) or removing residual monomer(s) from the poly(vinyl chloride) composition.

10. The method of any one of claims 1 to 9 for modifying the morphology of the poly(vinyl chloride) particles which are poly(vinyl chloride) grains.

11. The method of claim 10 for smoothing the surface of the poly(vinyl chloride) grains and/or influencing the porosity of the poly(vinyl chloride) grains.

12. The method of any one of claims 1 to 11 for increasing the glass transition temperature and/or thermal stability of the poly(vinyl chloride) composition.

13. A method for producing a poly(vinyl chloride) composition comprising suspension polymerizing vinyl chloride monomer and optional comonomer(s) in an aqueous medium and treating the resulting poly(vinyl chloride) composition by the method according to any one of claims 1 to 12.

14. The method of claim 13 excluding a step wherein the suspension of poly(vinyl chloride) is stripped with steam and/or a step wherein the wet cake of poly(vinyl chloride) is subjected to thermal drying.

15. A poly(vinyl chloride) composition obtainable by the method according to any one of claims 1 to 14.

16. The poly(vinyl chloride) composition of claim 15 further containing additives that are necessary to process the poly(vinyl chloride) into finished products.
